# EUROPEAN PATENT APPLICATION

(11) **EP 4 730 616 A1**
(43) Date of publication of application: **22.04.2026**
(21) Application number: 24206809.6
(22) Date of filing: 16.10.2024
(51) Int. Cl.: H02K 1/276

(54) **ROTOR AND HOUSEHOLD APPLIANCE**

(71) Applicant: BSH Hausgeräte GmbH, 81739 München (DE)
(72) Inventor: Farkas, Viliam, 07101 Michalovce (SK); Blaz, Robert, 06601 Humenne (SK)

(57) **Abstract**

Disclosed is a spoke rotor for use in an electric motor, wherein only rotor segments (rotor poles) with a uniform magnetic polarity created by magnets are electrically connected to a rotor hub, and a household appliance.

## Description

The present invention relates to a rotor for an electric motor and a household appliance.

Rotors for use in electric motors state of the art are shown in US 2016/0006303 A1 and US 2017/288486 A1. These documents show spoked rotors having a rotor hub, a plurality of magnets evenly arranged about the rotor hub and a plurality of pole segments evenly arranged about the rotor hub. Some pole segments have a first polarity and the other pole segments have a second polarity which is different to the first polarity. Each segment consists of a plurality of single metal sheets, so call laminations. The pole segments are attached to the rotor hub at their radial inner end via so called spoke connections, wherein in order to reduce a magnetic flux leakage, the US 2016/0006303 A1 describes a retention structure connecting the pole segments with the rotor hub comprises a body which is made from a magnetic insulative material is overmoulded over at least portions of the pole segments. The US 2017/288486 A1 describes a rotor hub made from a plastic material for connecting the pole segments, which is attached to the shaft preferably via injection moulding.

The object of the present invention is to propose an alternative rotor for use in an electric motor showing less or no magnetic flux leakage at its spoke connections, and a household application with a high-performance motor.

The object is achieved by a rotor with the features of claim 1, and by a household appliance with the features of claim 10. Advantageous embodiments are disclosed in the dependent claims, the description and the figures.

According to the invention, a rotor for use in an electric motor, comprises a rotor hub, a plurality of magnets evenly arranged about the rotor hub and a plurality of pole segments evenly arranged about the rotor hub. Some pole segments have a first polarity and the other pole segments have a second polarity which is different to the first polarity. The pole segments alternate with the magnets, such that each of said magnets is positioned between adjacent pole segments. According to the invention, only the pole segments of the first polarity or of the second polarity are connected to the hub via magnetic conductive spoke connections.

By means of attaching only the pole segments of one polarity to the rotor hub, a magnetic flux leakage (short cut) is prevented, a magnetic insulative retention structure and thus any moulding step can be omitted. This facilitates the assembly and reduces the number of required components. Moreover, connection of only one type of pole segments poles with the same polarity to the rotor hub allows bigger cross section of the spoke connection without the risk of flux leakage. Further on, bigger cross section of the spoke connection means higher mechanical stability of rotor during operation.

Preferably, the pole segments connected with the rotor hub are integrally formed with the rotor hub. This means, the rotor hub and the pole segments are made from the same stacked metal sheets. This can be done by stacking the required metal sheets and then cut out the pole segments and the rotor hub, respectively the areas between them.

Alternatively, the pole segments attached to the rotor hub are in form fit engagement with the rotor hub, for instance via dovetail-connections. This enables the production of a single rotor hub.

Preferably, the pole segments of the other polarity are radially spaced apart from the rotor hub. This means, an air gap is provided between the pole segments of the other polarity, no further components are required to enable the magnetic insulation of these pole segments.

In order to ensure the mechanical stability of the rotor packet (rotor hub, pole segments and magnets) bridge connections are provided at the radial outer diameter of the pole segments. The bridge connections can be provided at every pole segment, at every second pole segment or at any other pole segment. The number of bridge connections refers basically to the motor torque of the motor for which the rotor is provided for. The bridge connections themselves can be magnetic conductive.

In order to avoid any misalignment of the magnets during operation based on centrifugal forces acting on the magnets, the pole segments have at their radial outer support structures to hold the magnets in place while the rotor is turning during operation. The support structures can have different shapes based on the outer shape of the magnets and the centrifugal forces to be stand.

In order to avoid any misalignment of the pole segments which are radially spaced apart from the rotor hub during operation based on centrifugal forces acting on the pole segments, the pole segments have radial inner support structures to interact with the magnets while the rotor is turning during operation. The support structures can have different shapes based on the outer shape of the magnets and the centrifugal forces to be stand.

Alternatively, to the support structures, the pole segments and the magnets can be in adhesive connection in order to stand centrifugal forces. Bonding the magnets and the pole segments reduces the number of manufacturing steps as support structures can be omitted. For disassembly reasons, a bonding medium (glue) is used which can be softened by application of a determined temperature which is higher than a maximum internal rotor temperature during operation.

Preferably, in order to reduce the weight of the pole segments depend which have a direct impact on the centrifugal forces, axial opening can be provided in the pole segments. The size and shape depend on the magnetic flux density distribution.

A household appliance according to the invention has an electric motor with a rotor according to the invention. An exemplary household appliance is a blender or a multifunctional cooking machine.

In the following, preferred embodiments of the present invention are explained with respect to the accompanying drawings. As is to be understood, the various elements and components are depicted as examples only, may be facultative and/or combined in a manner different than that illustrated. Reference signs for related elements are used comprehensively and not defined again for each figure. Shown is schematically in
- Fig. 1:: a perspective view of a rotor according to the invention;
- Fig. 2:: a front view of the rotor with illustrated polarities;

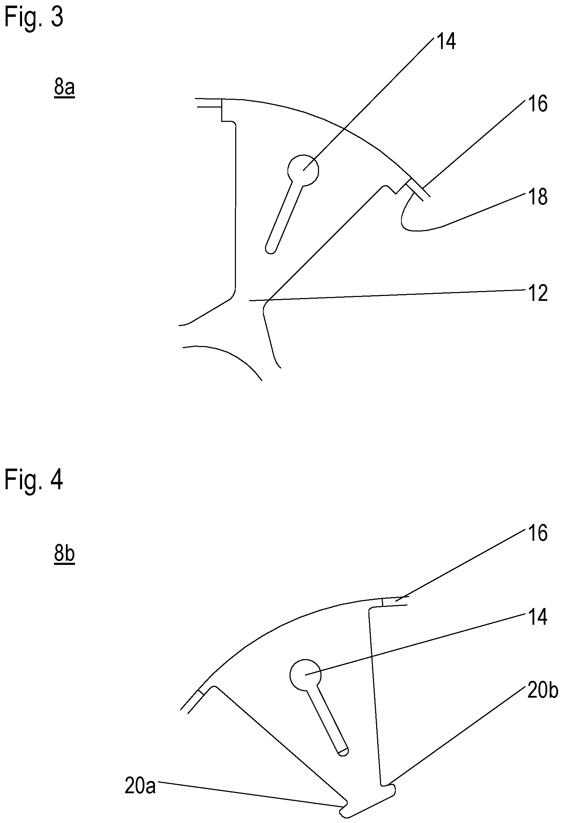

- Fig. 3:: a detailed view of pole segment connected to a rotor hub; and
- Fig. 4:: a detailed view of pole segment spaced apart from the rotor hub.

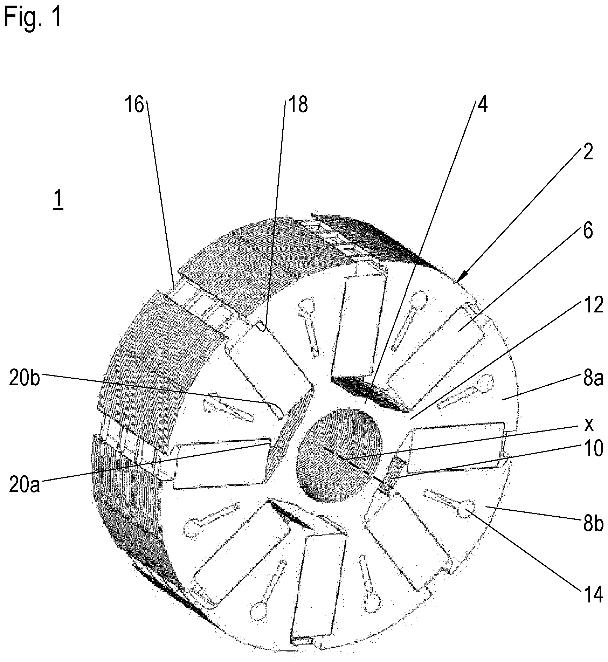

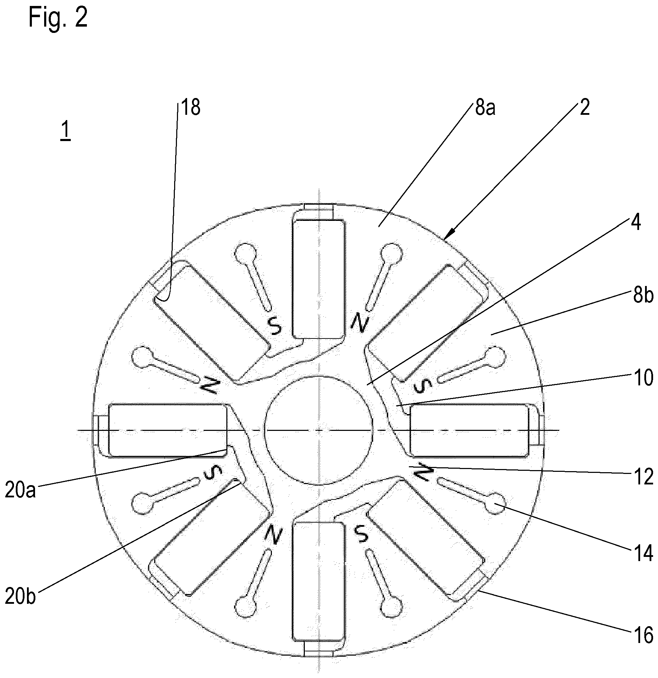

In Figures 1 and 2, a rotor packet 1 according to the invention for use in an electric motor, for instance of a household appliance is shown. However, the motor can also be used in the field of automotive/industry application. For the sake of completeness, a rotor axis x is illustrated around which the rotor packet 1 is turning during operation of the electric motor.

The rotor packet 1 has a spoke rotor 2 according to the invention, with a rotor hub 4, a plurality of magnets 6 evenly arranged about the rotor hub 4 and a plurality of pole segments 8a, 8b evenly arranged about the rotor hub 4.

The pole segments 8a, 8b have a triangular shape. They alternate with the magnets 6, in particular permanent magnets, such that each of said magnets 6 is positioned between adjacent pole segments 8a, 8b. As a consequence, adjacent pole segments 8a, 8b have different polarities. Some of them has a first polarity (north pole), whereas the remining pole segments 8b has a second polarity (south pole) which is different from the first polarity.

According to the invention, only the pole segments 8a of the same polarity are connected to the rotor hub 4 via magnetic conductive spoke connections 10. Here, only the pole segments 8a with the north pole are in conductive and mechanical contact with the rotor hub 4. The pole segments 8b of the other polarity (south pole) are not in mechanical contact with the rotor hub 4, but spaced apart radially from the rotor hub 4 such as an air gap 12 is established.

In this embodiment, the pole segments 8a which are connected to the rotor hub 4 directly via spoke connections 10 and the rotor hub 4 are integrally formed parts. In particular, the pole segments 8a and the rotor hub 4 are made from the same stacked metal sheets. The pole segments 8a and the rotor 4 are made via cutting or punching along their desired outer contour. During the cutting/punching process, the pole segments 8b of the second polarity are produced from the same metal sheet stack, just by cutting/punching as well.

In order to reduce the weight of the pole segments 8a, 8b, central axial openings 14 can be provided in them.

At their outer radial end, contrary to their spoke connections 10, bridge connections are provided between the pole segments 8a, 8b. In the embodiment shown, every adjacent pole segments 8a, 8b are connected with each other. This means, the pole segments 8a, 8b of different polarity are stabilising each other at their radial outer ends. The bridge connections 16 extends in circumferential direction and have the shape of longitudinal rods. Here, three bridge connections 16 are provided between adjacent pole segments 8a, 8b.

In order to avoid any misplacement or misalignment of the magnets 6 between the pole segments 8a, 8b during operation due to centrifugal forces, radial outer support structures 18 are provided on the pole segments 8a which are connected to the rotor hub 4. The support structures 18 extent in circumferential direction and form a kind of stop shoulder for the magnets 6 in radial outwards direction.

In order to misplacement or misalignment of the pole segments 8b which are radially spaced apart from the rotor hub 4 during operation due to centrifugal forces, each pole segments 8b is provided with two radial inner support structures 20a, 20b at their radial inner end. The radial inner support structures 20a, 20b extend in opposite circumferential direction. During operation, the inner structures 20, 20b are forced against the magnets 6, such that radial movement of the pole segments 8b is prevented.

Disclosed is a spoke rotor for use in an electric motor, wherein only rotor segments (rotor poles) with a uniform magnetic polarity created by magnets are electrically connected to a rotor hub, and a household appliance.

### Reference signs

- 1: rotor packet
- 2: rotor
- 4: rotor hub
- 6: magnet
- 8a: pole segment of a first polarity (north pole)
- 8b: pole segments of a second polarity (south pole)
- 10: air gap
- 12: spoke connection
- 14: axial opening
- 16: bridge connection
- 18: radial outer support structure
- 20a, b: radial inner support structure

- x: longitudinal direction (rotor axis)

## Claims

1. A rotor (2) for use in an electric motor, comprising:
• a rotor hub (4);
• a plurality of magnets (6) evenly arranged about the rotor hub (4); and
• a plurality of pole segments (8a, 8b) evenly arranged about the rotor hub (4); wherein
• some pole segments (8a) have a first polarity and the other pole segments (8b) have a second polarity which is different to the first polarity;
said pole segments (8a, 8b) alternate with the magnets (6), such that each of said magnets (6) is positioned between adjacent pole segments (8a, 8b);
wherein
• only the pole segments (8a) of the first polarity or the pole segments (8b) of the second polarity are connected to the rotor hub (4) via magnetic conductive spoke connections (12).

2. The rotor according to claim 1, wherein the pole segments (8a) connected with the rotor hub (4) are integrally formed with the rotor hub (4).

3. The rotor according to claim 1, wherein the pole segments (8a) attached to the rotor hub (4) are in form fit engagement with the rotor hub (4).

4. The rotor according to claims 1, 2 or 3, wherein the pole segments (8b) of the other polarity are radially spaced apart from the rotor hub (4).

5. The rotor according to any of the preceding claims, wherein bridge connections (16) are provided at the radial outer diameter of the pole segments (8a, 8b).

6. The rotor according to any of the preceding claims, wherein at least some pole segments (8a) have radial outer support structures (18) to hold the magnets (6) in place while the rotor (2) is turning during operation.

7. The rotor according to any of the preceding claims, wherein at least some pole segments (8b) have radial inner support structures to interact with the magnets (6) while the rotor (2) is turning during operation.

8. The rotor according to any of claims 1 to 6, wherein the pole segments (8a, 8b) and the magnets (6) are in adhesive connection.

9. The rotor according to any of the preceding claims, wherein the pole segments (8a, 8b) have axial openings

10. A household appliance with an electric motor having a rotor (2) according to one of the preceding claims.
